# EUROPÄISCHE PATENTSCHRIFT

(11) **EP 1 844 451 B1**
(45) Veröffentlichungstag und Bekanntmachung des Hinweises auf die Patenterteilung: **27.07.2011**
(21) Anmeldenummer: 06742220.4
(22) Anmeldetag: 24.01.2006
(51) Int. Cl.: G07F 7/06, B62B 5/04, B62B 3/14

(54) **EINKAUFSWAGEN**
SUPERMARKET TROLLEY
CHARIOT DE SUPERMARCHE

(30) Priorität: 03.02.2005 DE 202005001770 U
(43) Veröffentlichungstag der Anmeldung: 17.10.2007
(73) Patentinhaber: Sonnendorfer, Horst, 82178 Puchheim (DE); Wieth, Franz, 82178 Puchheim (DE)
(72) Erfinder: Sonnendorfer, Horst, 82178 Puchheim (DE); Wieth, Franz, 82178 Puchheim (DE)
(74) Vertreter: Braun-Dullaeus, Karl-Ulrich
(86) Internationale Anmeldenummer: PCT/DE2006/000105
(87) Internationale Veröffentlichungsnummer: WO 2006/081793

(56) Entgegenhaltungen:
- WO-A-96/04161
- DE-A1- 3 239 040
- FR-A- 2 848 323

## Beschreibung

### Technisches Gebiet

Die Erfindung betrifft einen Einkaufswagen der mit einem Pfandsystem und einer Wegfahrsperre ausgerüstet ist.

Das Pfandsystem bewirkt, dass der Einkaufswagen erst nach Einschieben eines Pfandes aus einer Sammelstation entnommen werden kann und das Pfand erst dann wieder zurückgegeben wird, wenn der Einkaufswagen zu einer Sammelstation zurückgebracht wird. Der Einkaufswagen ist solange nicht benutzbar, bis erneut ein Pfand in das Pfandsystem eingeschoben wird.

Die Wegfahrsperre verhindert, dass ein Einkaufswagen ausserhalb eines definierten Bereichs benutzt werden kann.

### Stand der Technik

Es sind aus dem Stand der Technik verschiedene Arten von Pfandsystem bekannt. Es gibt Systeme, bei denen eine Vielzahl von ineinander genesteten Einkaufswagen über Schlösser und Ketten verbunden sind. Zum Benutzen des Einkaufswagens muß ein Pfand in das Schloß gegeben werden. Das Pfand wird erst wieder freigegeben, wenn der Einkaufswagen in einen anderen Einkaufswagen genestet steht und über die Kette mit dem anderen Einkaufswagen wieder verbunden ist.

Bei manchen Pfandsystemen muß zur Freigabe des Pfandes der Einkaufswagen zusätzlich mit einer weiteren Kette an einer Sammelstation befestigt werden bevor das Pfand freigegeben wird.

Aus dem Stand der Technik sind auch mehrere Arten von Wegfahrsperren bekannt. Die FR 2848323 A zeigt eine Wegfahrsperre, bei welcher mittels Pfandschlössern und Ketten, die an einem festen Punkt angebracht sind eine Wegfahrsperre realisiert ist. Die Wegfahrsperren verhindern die Benutzung eines Einkaufswagens ausserhalb eines definierten zulässigen Bereiches. Die Wegfahrsperren umfassen Mittel zum Erkennen des zulässigen Bereichs und letztlich mechanisch wirkende Mittel zum Verhindern der Benutzung. Es gibt gattungsgemäβe Wegfahrsperren, bei denen mindestens eine Rolle des Einkaufswagens blockiert wird. Bei anderen gattungsgemäβen Wegfahrsperren wird die Lenkbarkeit des Einkaufswagens so eingeschränkt, dass nur noch Kreisfahrten möglich sind.

### Offenbarung der Erfindung

Die Erfindung gemäβ Anpsruch 1 besteht darin, dass Elemente, die von Pfandsystemen bekannt sind mit Elementen der Wegfahrsperre zusammenwirken und dieses neuartige Zusammenwirken eine neue Kombination mit Synergieeffekten schafft.

Vom Pfandsystem wird das Element zum Halten und Freigeben des Pfandes verwendet, von der Wegfahrsperre wird das Element verwendet, welches die Rolle blockiert oder in der Lenkbarkeit einschränkt.

### Beste Ausführungsform der Erfindung

Das Element zum Halten und Freigeben des Pfandes umfasst einen Sensor, der erkennt, ob der Einkaufswagen, an welchem sich das Element zum Halten und Freigeben des Pfandes befindet in einen anderen Einkaufswagen eingeschoben ist.

Das Element zum Halten und Freigeben des Pfandes aktiviert daraufhin die Wegfahrsperre und gibt den Pfand frei.

Zum Benutzen des Einkaufswagens ist es notwendig, ein Pfand in das Element zum Halten und Freigeben des Pfandes einzuschieben. Daraufhin wird die Wegfahrsperre deaktiviert.

Durch das Aktivieren der Wegfahrsperre ist ein unbeabsichtigtes Wegrollen des Einkaufswagens verhindert.

In einer Weiterbildung der Erfindung ist es vorgesehen, die Funktion des Sensors dahingehend zu erweitern, dass das Vorhandensein einer oder mehrerer weiterer Bedingungen erfasst wird und das Pfand nur dann freigegeben wird, wenn die weiteren Bedingungen zusätzlich erfüllt sind.

Eine der weiteren Bedingungen kann eine Ortsinformation sein, wodurch erreicht wird, dass das Pfand nur dann freigegeben wird, wenn der Einkaufswagen an einem bestimmten Ort abgestellt wird.

Hierdurch ist es möglich, dass der Pfand nur dann wieder freigegeben wird, wenn sich der Einkaufswagen an einer Sammelstelle befindet und in einen anderen Einkaufswagen vorschriftsmäßig eingeschoben ist.

Die Sammelstelle muß so ausgestaltet sein, dass der Sensor des ersten Einkaufswagens, der den Kopf einer Reihe von Einkaufswagen bildet eine Information erhält, die der gleichwertig ist, die der Sensor erhält, wenn der Einkaufswagen in einen anderen Einkaufswagen eingeschoben ist.

So wird verhindert, dass sich so genannte "wilde Reihen" von ineinander geschobenen Einkaufswagen außerhalb der planerisch vorgesehenen Sammelstellen bilden.

In der Sammelstelle stehen die Einkaufswagen durch die Wegfahrsperre gebremst, und bilden einen Pulk, aus jeweils einzeln gebremsten Einkaufswagen.

In einer Weiterbildung der Erfindung ist vorgesehen, dass eine autorisierte Person mit Hilfe einer speziellen Vorrichtung die Wegfahrsperren eines Einkaufswagens oder einer Vielzahl von Einkaufswagen deaktivieren kann, ohne dass ein Pfand eingesetzt werden muss.

Dies ist beispielsweise dann nötig, wenn die Einkaufswagen durch Servicepersonal von einer Sammelstelle zu einer anderen verschoben werden soll.

Wenn in den letzten Einkaufswagen ein Pfand eingeschoben wird, dann wird die Wegfahrsperre des Einkaufswagens deaktiviert, der Einkaufswagen ist bewegbar.

Der Einkaufswagen steht nun zum üblichen Zweck, dem Transport von gekaufter Ware zur Verfügung.

Sollte der Versuch unternommen werden, mit dem Einkaufswagen den Bereich zu verlassen, der vom Bereitsteller des Einkaufswagens als zulässiger Bereich definiert wurde, dann tritt die Wegfahrsperre in Aktion.

Der Pfand wird in diesem Fall nicht freigegeben.

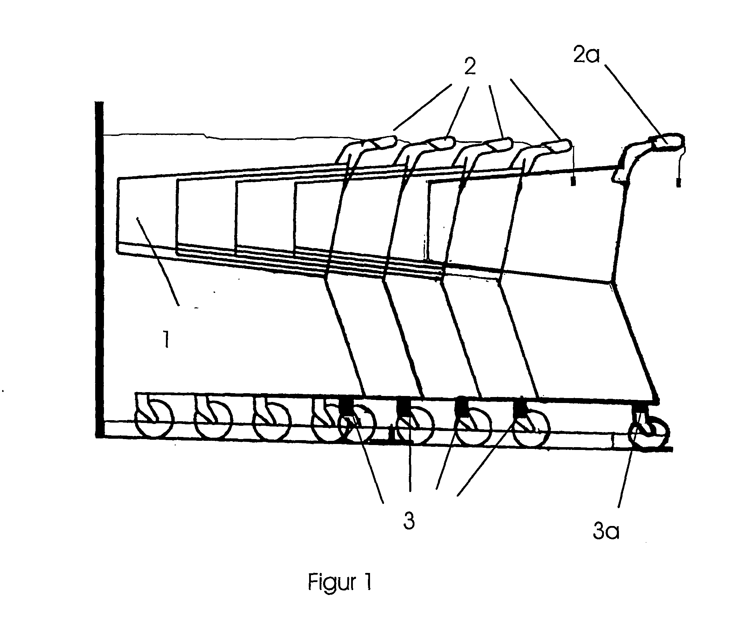

Die Figur 1 zeigt die Erfindung in schematischer Darstellung:

Eine Vielzahl von Einkaufswagen sind in einem Stapel 1 abgestellt. Jeder Einkaufswagen hat ein Pfandlement 2 zum Halten und Freigeben eines Pfandes und eine auf mindestens ein Rad einwirkende Wegfahrsperre 3. Diese Wegfahrsperren 3 stehen in funktionaler Verbindung mit den Elementen 2.

In die Pfandelemente 2 sind Schlüssel eingeschoben, durch welche das Pfand freigegeben wurde. Gleichzeitig mit der Freigabe des Pfandes wird die Wegfahrsperre 3 aktiviert.

Der letzte Einkaufswagen wird gerade in den Stapel 1 eingeschoben. In seinem Pfandelement 2a befindet sich ein Pfand, die Wegfahrsperre 3a ist nicht aktiviert, der Einkaufswagen lässt sich normal bewegen.

Im Pfandelement kann auch ein Sensor enthalten sein, der den Pfand nur dann herausgibt, wenn der Einkaufswagen ganz im vorderen Wage eingeschoben ist.

### Gewerbliche Anwendbarkeit

Die Erfindung ist überall dort gewerblich anwendbar wo Einkaufswagen auf Pfandbasis bereitgestellt werden und wieder in eine Sammelstelle zurückgebracht werden sollen.

## Patentansprüche

1. Einkaufswagen mit
- einem Pfand Element zum Halten und Freigeben eines Pfandes und
- mit einer wahlweise aktivierbaren und deaktivierbaren Wegfahrsperre, wobei im aktivierten Zustand mindestens eine Rolle des Einkaufswagens blockiert ist oder in der Lenkbarkeit eingeschränkt ist
**dadurch** gekennzeichet, dass
die Wegfahrsperre deaktiviert ist, wenn sich ein Pfand im Pfand Element befindet und die Wegfahrsperre aktiviert ist, wenn sich kein Pfand im Pfand Element befindet.

2. Einkaufswagen nach Anspruch 1
**dadurch gekennzeichnet, dass**
das Pfand Element einen Sensor umfasst und das Pfand nur dann freigebbar ist, wenn der Sensor erkannt hat, dass der Einkaufswagen in einen anderen Einkaufswagen eingeschoben ist.

3. Einkaufswagen nach Anspruch 2
**dadurch gekennzeichnet, dass**
der Sensor eine Ortsinformation erfasst und das Pfand nur beim Vorliegen einer gültigen Ortsinformation freigebbar ist.

4. Einkaufswagen nach Anspruch 3
**dadurch gekennzeichnet, dass**
die Ortsinformation durch eine elektromagnetische oder magnetische oder optische Quelle erzeugt wird.

5. Einkaufswagen nach einem der vorangegangenen Ansprüche
**dadurch** gekenntzeichnet, dass
die Wegfahrsperre bei eingesetztem Pfand aktivierbar ist, wenn der Einkaufswagen einen vordefinierter Bereich verlässt.

## Claims

1. Shopping trolley with
- a token element for holding and releasing a token and
- with an immobilizer which is able to be optionally activated and deactivated, wherein in the activated state at least one roller of the shopping trolley is blocked or is restricted in its manoeuvrability,
**characterized in that**
the immobilizer is deactivated when a token is situated in the token element, and the immobilizer is activated when no token is situated in the token element.

2. Shopping trolley according to Claim 1,
**characterized in that**
the token element comprises a sensor and the token is only able to be released when the sensor has detected that the shopping trolley has been pushed into another shopping trolley.

3. Shopping trolley according to Claim 2,
**characterized in that**
the sensor picks up location information and the token is only able to be released with the presence of valid location information.

4. Shopping trolley according to Claim 3,
**characterized in that**
the location information is generated by an electromagnetic or magnetic or optical source.

5. Shopping trolley according to one of the preceding claims,
**characterized in that**
the immobilizer is able to be activated when a token has been inserted if the shopping trolley leaves a predefined area.

## Revendications

1. Caddie comportant
- un élément de consigne pour bloquer et débloquer une consigne et
- comportant un système d'immobilisation pouvant être activé et désactivé au choix, dans lequel en l'état activé au moins un rouleau du caddie est bloqué ou est limité dans sa dirigeabilité,
**caractérisé en ce que**
le système d'immobilisation est désactivé quand une consigne se trouve dans l'élément de consigne et le système d'immobilisation est activé, quand aucune consigne ne se trouve dans l'élément de consigne.

2. Caddie selon la revendication 1,
**caractérisé en ce que**
l'élément de consigne comprend un capteur et la consigne peut être débloquée seulement quand le capteur a reconnu que le caddie a été glissé dans un autre caddie.

3. Caddie selon la revendication 2,
**caractérisé en ce que**
le capteur détecte une information locale et la consigne peut être débloquée uniquement en présence d'une information locale valide.

4. Caddie selon la revendication 3,
**caractérisé en ce que**
l'information locale est produite par une source électromagnétique ou magnétique ou optique.

5. Caddie selon une des revendications précédentes,
**caractérisé en ce que**
le caddie peut être activé en présence d'une consigne insérée, quand le caddie quitte une zone prédéfinie.
